# EUROPÄISCHE PATENTSCHRIFT

(11) **EP 0 783 689 B1**
(45) Veröffentlichungstag und Bekanntmachung des Hinweises auf die Patenterteilung: **03.05.2000**
(21) Anmeldenummer: 94925411.4
(22) Anmeldetag: 28.07.1994
(51) Int. Cl.: G01N 27/407

(54) **FESTELEKTROLYTSENSOR ZUR MESSUNG GASFÖRMIGER ANHYDRIDE**
SOLID ELECTROLYTE SENSOR FOR MEASURING GASEOUS ANHYDRIDES
DETECTEUR A ELECTROLYTE SOLIDE PERMETTANT DE MESURER DES ANHYDRIDES GAZEUX

(43) Veröffentlichungstag der Anmeldung: 16.07.1997
(73) Patentinhaber: Heraeus Electro-Nite International N.V., 3530 Houthalen (BE)
(72) Erfinder: LEONHARD, Volker, D-65830 Kriftel (DE); GUTH, Ulrich, D-60389 Frankfurt am Main (DE); ERDMANN, Hartmut, D-61449 Steinbach/Taunus (DE); ILGENSTEIN, Marianne, D-65835 Liederbach/Taunus (DE); KÖPPEN, Heidrun, D-65770 Kelkheim/Taunus (DE); FISCHER, Dieter, D-71640 Ludwigsburg (DE)
(74) Vertreter: Kühn, Hans-Christian
(86) Internationale Anmeldenummer: EP9402506
(87) Internationale Veröffentlichungsnummer: WO9603642

(56) Entgegenhaltungen:
- EP-A- 0 182 921
- EP-A- 0 468 249
- US-A- 4 976 991
- SOLID STATE IONICS., Bd.53-56, August 1992, AMSTERDAM NL Seiten 80- - 84 W.F. CHU ET AL 'Thin and thick film electrochemical CO2 sensors'

## Beschreibung

Die Erfindung betrifft einen galvanischen Festelektrolytsensor zur Messung gasförmiger Anhydride wie CO₂, SOx, NOx gemäß dem Oberbegriff des Hauptanspruchs und geht aus von einem Sensor wie er in der EP-0 182 921 B1 offenbart ist.

Die Konzentration gasförmiger Anhydride wird seit geraumer Zeit unter Ausnutzung der NERNSTschen Gleichung an Gaskonzentrationszellen mit festen Elektrolyten bestimmt, die aus gasdichten, gesinterten reinen oder dotierten Alkali- oder Erdalkalisalzen bestehen. Je nach Art des Gases verwendet man für CO₂-Sensoren hauptsächlich Festelektrolyte auf der Basis von Na₂CO₃, für SOx-Sensoren solche auf Na₂SO₄-Basis und für NOx solche auf Ba(NO₃)₂-Basis. Mit solchen Anordnungen kann man bekanntermaßen langzeitstabil messen, wenn der Festelektrolyt gasdicht bleibt. Hierzu wird allerdings ein in der Handhabung und Realisation technisch aufwendiges Referenzgas konstanter Sauerstoff- und Anhydridkonzentration benötigt. Es hat nicht an Versuchen gefehlt, das Problem der langzeitigen Gasdichtheit des Elektrolyten zu lösen und eine besser handhabbare Referenzelektrode zu schaffen.

Bekanntermaßen kann z.B. die Gasdichtigkeit durch den Zusatz aliovalenter Kationen zu den Alkalisalzen verbessert werden, wobei sich gleichzeitig die Leitfähigkeit vergrößert (DD-PS 235 335 A1). Solche Anordnungen haben aber generell den Nachteil, daß Meß- und Bezugsgasraum gasdicht voneinander getrennt werden müssen, so daß sie sich nicht kostengünstig, z.B. durch Siebdruck fertigen lassen.

Systeme mit Bezugsgasraum werden dennoch immer weiter entwickelt, wobei z.B. die EP-0 470 625 A2 vorschlägt, auf einem heizbaren Substrat eine Referenzelektrodenschicht aus Pt und darüber einen Festelektrolyten z.B. aus Nasicon anzubringen, der auf seiner Oberseite von einer Meßelektrode bedeckt ist, wobei zwischen Festelektrolyt und Substrat um die Referenzelektrodenschicht herum ein Gasbezugsraum mittels einer Glasabdeckung abgeschlossen wird, die sich über die Seitenflächen vom Substrat und vom Festelektrolyten legt, der so insgesamt vollständig eingeschlossen ist. Eine solche Anordnung ist wiederum technisch nicht effektiv, z.B. in Siebdruckverfahren herstellbar. Zudem ist es schwierig, stabile Verbindungen zwischen dem Festelektrolytmaterial und dem Glas zu erzielen, ohne daß mit der Zeit Reaktionen zwischen beiden Materialien auftreten.

Das Problem der Trennung von Meß- und Bezugsgasraum kann durch die Verwendung eines zweiten Festelektrolyten umgangen werden. Zur Messung gasförmiger Anhydride wie beispielsweise CO₂ sind Festkörperzellen vorgeschlagen worden (DE-PS 40 22 136 C2), die aus einer Kombination von Alkaliionen-leitendem Festelektrolyt, der aus dem Anhydrid gebildet wird, z.B. aus Na₂CO₃, und einem keramisch stabilen, meist dichten Material, z.B. Nasicon oder β-Al₂O₃ bestehen, in dem das gleiche Kation beweglich ist. Beide Festelektrolyte sind jeweils mit Metallschichten versehen, an denen sich elektrochemische Gleichgewichte einstellen können, in deren Folge zwischen diesen eine Gleichgewichtszellspannung oder EMK gemessen werden kann. Bei solchen Anordnungen muß sich an der Meßelektrode des Anhydrid, z.B. CO₂ und O₂, elektrochemisch umsetzen, während an der Referenzseite nur Sauerstoff wirksam wird. Die dann im Alkaliionen-leitenden keramischen Festelektrolyten gebildeten Sauerstoffspezies können durch diesen nicht wandern, so daß durch den Meßstrom oder durch Gaswechsel bewirkte Störungen des Elektrodenpotentials nicht ausgeschlossen werden können. Solche Störungen machen sich durch lange Einstellzeiten und durch Drifterscheinungen des Zellsignals bemerkbar.

Verwendet man anstelle des Alkaliionen leitenden Festelektrolyten einen Oxidionen-leitenden, so kann man damit zwar eine belastbare Sauerstoffreferenzelektrode realisieren, die Grenzfläche zwischen diesem Elektrolyten und dem aus dem Anhydrid gebildet ist aber gassensitiv und muß deshalb gasdicht vom Meßgasraum abgetrennt werden, was sich in einfacher Weise wiederum nicht bewerkstelligen läßt.

Allen Bemühungen, um die Realisierung einer Bezugselektrode an Alkaliionen leitenden Festelektrolyten war gemeinsam, daß man versucht hat, möglichst reversible Bedingungen für die Elektrodenreaktion zu schaffen. Eine solche Elektrode kann nach allgemeinem Verständnis nur eine sein, bei der ein Alkaliionendurchtritt durch die Phasengrenze erfolgt. Störungen infolge von Stromfluß werden ausgeglichen, indem ein Alkaliionenstrom je nach Stromrichtung die Phasengrenze passiert und die erforderlichen Elektronen aus dem metallischen Leiter, z.B. Gold, kommen oder an diesen abgegeben werden.

Die andere Möglichkeit ergibt sich bei Verzicht auf eine Metall/Metallionenelektrode (z.B. Na/Na+-Elektrode) durch die Realisierung einer O₂, Metall/keramischer Alkalileiter- Elektrode (kurz Sauerstoffelektrode genannt). Nachteilig an einer solchen Sauerstoffelektrode ist, daß sie auch bei Zutritt von genügend Sauerstoff leicht störbar ist, weil sich bei Stromfluß nur wenig Sauerstoff umsetzen kann und sich sehr schnell die Elektrodenreaktion blockierende Bedingungen einstellen. Diese Elektrodenreaktion kann bei Anwesenheit von Sauerstoff durch eine parallel dazu ablaufende elektrochemische Umsetzung mit Anhydriden gestört werden, so daß sich nach Maßgabe der Störung Mischpotentiale bilden können.

Die Verwendung einer Metall/Metallionenelektrode, z.B. von Natrium (1)/Na+-leitender Festelektrolyt als stabile Referenzelektrode wie sie von J. Liu und W. Weppner in Solid State Comm. 76(1990), Seiten 311-313, vorgeschlagen wurde, ist zwar prinzipiell möglich, allerdings weder ungefährlich noch leicht handhabbar (wegen des sich bei den Meßtemperaturen verflüssigenden Natriums), so daß solche Elektroden für eine Massenanwendung kaum in Betracht kommen.

Eine bessere Stabilität der Referenzelektrode kann dadurch erreicht werden, daß man Systeme verwendet, die sowohl Alkaliionen-leitend als auch Elektronen-leitend sind. Legierungen aus Edelmetallen und Alkalimetall, z.B. Natrium in Gold sind jedoch bei den Meßtemperaturen chemisch nicht sehr stabil. Außerdem verändert sich leicht die Alkalimetallaktivität, was wiederum zu einer Änderung des Potentials führt. Alkaliverbindungen von Übergangsmetalloxiden, wie Wolframbronzen, in denen das Alkaliion oft intercaliert vorliegt, haben meist eine größere Phasenbreite für Alkaliionen und sind zudem häufig giftig. Sie müssen gut haftend und vor dem Meßgas geschützt auf den Festelektrolyten aufgebracht werden. Die Abdeckmaterialien reagieren über längere Zeit mit diesen Systemen, was zur Rißbildung und damit zum Meßgaseintritt an die Referenzelektorde führen kann und Drifterscheinungen nach sich zieht. Technologische Schwierigkeiten bereitet die Aufbringung des Referenz- und des Abdeckmaterials, die in ihrem Ausdehnungskoeffizienten auf den Festelektrolyten abgestimmt sein müssen, so daß sich solche Sensoren nicht in einfacher Weise, z.B. durch Siebdrucken herstellen lassen.

Es wurde auch vorgeschlagen, den gesamten, nicht mit dem Metallsalz bedeckten Festelektrolyt, der auf gegenüberliegenden Seiten eine Referenzelektrode aus Metall und eine Meßelektrode aus Metall mit der darüberliegenden Metallsalzschicht trägt, mit einer elektrisch isolierenden Abdeckschicht aus Keramik, Glas oder Kunststoff zu überziehen (EP-0 182 921 B1). Damit lassen sich aber wiederum nicht die Nachteile, die durch das erforderliche Verbindungen von unterschiedlichen Materialien entstehen, vermeiden. Zudem besteht die Gefahr, wie eigene Untersuchungen zeigten, daß über längere Zeit die Abdeckschicht mit dem Festelektrolyten reagiert oder infolge von in die Abdeckschicht eindringende Verunreinigungen diese bei Betriebstemperatur des Sensors mehr oder weniger leitfähig wird und damit eine Diffusionsspannung verursacht und in deren Folge eine Drift des Sensorsignals. Insbesondere die für die Abdeckschicht vorgeschlagenen Gläser können durch Eindiffusion von Alkaliionen an der Phasengrenze elektrisch leitend werden. Insgesamt gesehen, gelang es bei den durchgeführten Versuchen weder, eine stabile Grenzfläche Metallsalz/Abdeckschicht, noch eine stabile Grenzfläche Elektrolyt/Abdeckschicht zu erzielen.

Es wurde auch in Betracht gezogen, ein Metall/Metalloxidgemisch (z.B. Pd/PdO) mit thermodynamisch definiertem, konstantem Sauerstoffpartialdruck zu verweden. Nachteilig bei solchen Elektroden ist die Temperaturabhängigkeit des sich einstellenden Sauerstoffpartialdruckes. Weiterhin bestehen die ebenfalls geschilderten Nachteile, die mit der gasdichten Abdeckung solcher Systeme verbunden sind.

Aus dem Dokument EP-A O 468 249, Fig. 2, geht ein galvanischer Festelektrolytsensor hervor, der eine Gegenelektrode aus Natriumwoltrambronze enthält, die mit einer Keinkapselung bedeckt ist. Auch Kalium- oder Lithiumwolframbronzen sind entsprechend verwendbar. Diese Bronzen sind keine Elektrodenleiter, sondern Gemsichtleiter, die sowohl Elektronen als auch Ionen leiten. Ein gasdichter Abschluß eine Pt/Au-Elektrode läßt sich der Fig. 2 nicht entnehmen.

Der Erfindung liegt die Aufgabe zugrunde, einen Festelektrolytsensor der gattungsgemäßen Art zu schaffen, der in einfacher Weise durch elektronikkompatible Techniken, wie Siebdruck fertigbar und langzeitstabil ist, bei dem insbesondere keine Diffusionsspannungen auftreten.

Dies gelang mit einem Sensor gemäß dem Gegenstand des Patentanspruches 1, wobei sich auf dieser Grundlage Sensoren mit geringer Querempfindlichkeit gegenüber Wasserdampf und Luftverunreinigungen bzw. nicht nachzuweisenden Anhdyriden realisieren ließen, mit denen eine kontinuierliche Messung möglich war und die Referenzelektrode langzeitstabil war.

Bei den Versuchen, einen solchen Sensor zu schaffen, machten die Erfinder zufällig und völlig überraschend die Beobachtung, daß entgegen der Lehre in der EP-0 182 921 B1 und den sonst bekannten Anordnungen mit oder ohne Bezugsgasraum gerade eben nicht der gesamte Festelektrolyt außerhalb des Metallsalzes, z.B. mit Glas zu bedecken ist, sondern stattdessen in reproduzierbarer Weise stabile Sensoren erzielt werden, wenn nur das Elektronen-leitende Material der Referenzelektrode (vorzugsweise Gold oder Platin, möglich jedoch auch inerte Halbleitermaterialien) mit Glas bedeckt wird und dabei nur die Randbereiche dieser Glasschicht auf den Festelektrolyten stoßen. Mit anderne Worten wird lediglich der an den keramischen Festelektrolyten angrenzende Bereich des Referenzelektronenleiters mit einer gasdichten Schicht bedeckt, wobei ein praktisch gasdichter Abschluß der elektronenleitenden Referenzelektrode erzielt wird.

Da alle beteiligten Fachleute sich nicht erklären konnten, warum gerade hiermit ein stabiles, funktionsfähiges System erzielt wurde, wurden eine Reihe von Versuchen, z.B. mit unterschiedlichen Gläsern und Auftragungstechniken wie Siebdruck mit nachträglichem Brennen, Aufpinseln oder Auftragen von zu brennenden Glaskörnern vorgenommen. Dabei ergab sich, daß beim Aufdrucken des Sensors auf einem Substrat, bei unterschiedlichen Abdeckschichtbreiten und -rändern stets stabile Referenzelektroden hergestellt werden konnten, wenn zwischen Meßelektrode und bedeckter Referenzelektrode ein Abstand, vorzugsweise im Bereich weniger mm oder mehr vorlag, in dem der Festelektrolyt nicht bedeckt war. In diesem Fall können Wechselwirkungen, Diffusionaspannungen und Kurzschlußreaktionen zwischen den Grenzflächen bzw. Elektroden zuverlässig vermieden werden.

Anordnungen wie in der EP-0 182 921 B1 mit Elektroden auf Ober- und Unterseite des Festelektrolyten sind ebenfalls möglich, wobei auch hier nur die mehr oder weniger dicken Randbereiche der Abdeckschicht auf den Festelektrolyten stoßen, der ansonsten bis zum Metallsalzbereich unbedeckt ist. Diese Anordnung ist jedoch bezüglich der effektiven Herstellung nicht so vorteilhaft, wie die Anordnung auf einem Substrat.

In jedem Fall läßt sich die Verbindung zwischen dem Referenzelektronenleitungsmaterial wie Pt und Au und der Abdeckschicht, vorzugsweise Glas, technisch einfach und dauerhaft dicht und fest haftend erzielen. Die relativ kleine Grenzfläche zwischen Abdeckschicht und Festelektrolyt bereitet keine technischen Schwierigkeiten.

Eine mögliche Deutung der Funktionsfähigkeit des erfindungsgemäßen Sensors ist die folgende. Die Materialschicht, vorzugsweise aus Glas oder einer Keramik geschlossener Porösität mit einer weitestgehend gasabdichtenden Wirkung, die das Elektronen leitende Referenzelektrodenmaterial überzieht, enthält sowohl einen bestimmten, kleinen von der Meßtemperatur unabhängigen (jedoch nicht thermodynamisch vorgebbaren) Vorrat von Luft und/oder schließt diesen ab. Derartige Luftvorräte können z.B. durch die Rauhigkeit oder Porosität Metallschicht bzw. deren Oberfläche entstehen. Außerdem schützt diese Materialschicht die Referenzelektrode vor Verunreinigungen, die eine Querempfindlichkeit hervorrufen und verhindert somit den Zutritt von Stoffen, die parallel elektrochemisch wirksam werden könnten. Solche Verunreinigungen können Wasserdampf oder sublimierte Alkalisalze (z.B. Na₂CO₃) oder Reaktionsprodukte von diesen mit in der Luft vorhandenen Verunreinigungen (z.B. Na₂SO₄) sein. Die Erscheinungen führen im einfachsten Fall dazu, daß sich auch auf der Sauerstoffseite des keramischen Alkaliionenleiters eine Sensitivität gegenüber dem nachzuweisenden Anhydrid ausbildet und damit mehr und mehr eine gassymmetrische Zelle mit einer gegen die Asymmetriespannung verlaufenden Spannung meßbar wird. Entstehen aber Reaktionsprodukte mit Wasserdampf oder SOx an der Oberfläche des keramischen Alkaliionenleiters, so folgt daraus eine Sensitivität gegenüber diesen Gasen, was zu einer Mischpotentialbildung und damit zu Abweichungen vom zu erwartenden NERNSTschen Verhalten bemerkbar macht.

Erfindungsgemäß ist die Referenzelektrode auf die Elektronen leitende (Metall)schicht begrenzt. Dadurch erreicht man sowohl die Verhinderung von Reaktionen mit dem Festelektrolyten als auch die Vermeidung von Kurzschlüssen und Diffusionsspannungen, die langfristig zu einer Drift des Sensorsignals führen.

Nach dieser Theorie wird z.B. das Glas, das einen kleinen Vorrat von Luft, die z.B. in der porösen Metallschicht vorhanden ist, abschließt oder eine Keramik mit geschlossenen Poren als Referenzmaterial angesehen, wobei die chemische Zusammensetzung einen nur geringen Einfluß auf die Stabilität des Referenzsignals hat. Nach den klassischen Vorstellungen der Elektrochemie wäre eine solche Elektrode leicht polarisierbar und deshalb nicht zu verwenden. Der Sauerstoffvorrat in einem solchen Material oder hierdurch abgeschlossen, genügt offenbar, uni bei Stromfluß, z.B. infolge eines unbeabsichtigten Kurzschlusses der Zelle, einen genügend großen Stoffumsatz zu gewährleisten und nach gewisser Einlaufzeit wieder ein konstantes Potential einzustellen. Elektrochemisch limitierend ist hier nicht der Vorrat an Sauerstoff, sondern der Ablauf der elektrochemischen Reaktion an der Phasengrenze alkaliionenleitender Festelektrolyt/Metall, Sauerstoff.

Unabhängig davon, ob diese Theorie zutrifft oder nicht, wird gegenüber dem aufgezeigten Stand der Technik der Vorteil erzielt, daß es möglich ist, ohne definiertes größeres und geometrisch vorzugebendes Bezugsgasvolumen durch direkte technisch einfache Anbringung der Abdeckschicht auf dem Elektronen leitenden Material der Referenzelektrode einen stabilen Sensor zu realisieren. Weitere Referenzelektrodenschichten sind nicht erforderlich.

Um Reaktionen mit dem keramischen Elektrolyten zu vermeiden, lassen sich erfindungsgemäß für die Abdeckschichten auch Materialien oder keramische Verbindungen verwenden, die vorzugsweise das gleiche Alkaliion enthalten wir der keramische Festelektrolyt. Diese Stoffe können elektrisch leitend sein und beinhalten z.B. Nasicon, β-Al₂O₃ und Na₂ZrO₃.

Als Gläser erwiesen sich besonders vorteilhaft zirkon- und bleihaltige Gläser. Allgemein gilt, daß die Gläser im thermischen Ausdehnungsverhalten an die Unterlage, d.h. die Elektronen leitende (Metall)Schicht und den Festelektrolyten angepaßt sein sollten, mit beiden chemisch verträglich sein sollten, eine gasdichte Abdeckung liefern sollten und eine hohe Transformationstemperatur von vorzugsweise um 600°C aufweisen sollten.

Erfindungsgemäß kann die Referenzelektrode durch elektronikkompatible Techniken wie Siebdrucken, Foliengießen und anschließendem Aufsintern sowie durch Oberflächenbeschichtungstechniken wie Sputtern hergestellt werden. Dies gilt ebenfalls für die jeweiligen gassensitiven Festelektrolytmaterialen der Meßelektrode wie Na₂CO₃ aus einem reinen oder dotierten Alkali- oder Erdalkalisalz, das aus dem zu messenden Anhydrid gebildet wird, sowie die einzusetzenden keramisch gut verarbeitbaren weitgehend gasdichten Festelektrolytmaterialien wie Nasicon und β-Al₂O₃, in denen das gleiche Ion wie im Alkali- oder Erdalkalisalz der Meßelektrode beweglich ist.

Im folgenden wird die Erfindung anhand der Zeichnung näher erläutert. Diese zeigt in schematischer Darstellung ein Ausführungsbeispiel des erfindungsgemäßen Sensors.

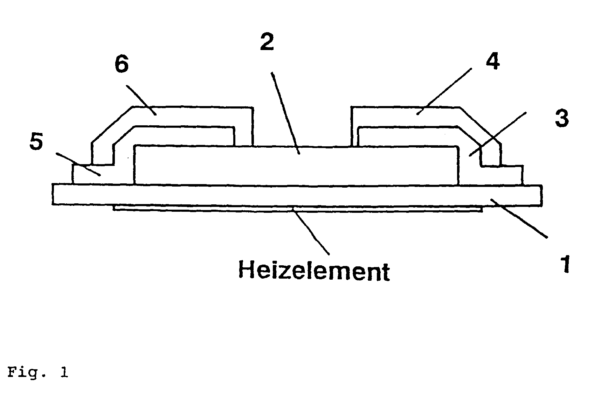

In der Fig. 1 ist auf einem Substrat 1 mit (wahlweise darin integriertem) Heizelement zur Erzielung der Betriebstemperatur in bekannter Weise ein keramischer Festelektrolyt 2 aufgedruckt. Auf diesem sind beidseitig und voneinander beabstandet je eine metallische Referenz- und Meßelektrodenschicht 3 und 5 aufgedruckt, die sich seitlich über den planaren Elektrolyten 2 bis zum Substrat erstrecken. Die Metallelektrodenschicht 5 der Meßelektrode trägt eine Metallsalzschicht 6. Über der Referenzmetallelektrode 3 ist lediglich eine Glasschicht 4 aufgedruckt, deren innerer Randbereich wie im Fall der Metallsalzschicht 6 auf den Festelektrolyten 2 stößt. In den Ausführungsbeispielen lagen jeweils wenige mm zwischen den Elektroden 3, 4 und 5, 6. In der schematischen Darstellung ist der Randbereich der Glasschicht 4 exakt rechtwinklig dargestellt. In der Praxis ist der Übergang mehr oder weniger gleichmäßig und abrupt. Auch kann die Dicke des auf den Festelektrolyten stoßenden Randes vom Glas solange beliebig gewählt werden, wie sichergestellt ist, daß zwischen den Elektroden noch ein ausreichender Abstand verbleibt und die Wechselwirkungen zwischen der stets noch vergleichsweise kleinen Grenzfläche zwischen Glas und Festelektrolyt 1 vernachlässigbar sind und nicht zu den erwähnten Störungen (störende chemische Wechselwirkungen, Ablösen der Schichten, Mischpotentialbildungen) führen.

Prinzipiell ist es auch möglich, die Elektroden auf der Vorder- bzw. Rückseite des Festelektrolyten 1 vorzusehen, wobei jedoch der Vorteil der Anwendung effizienter Techniken wie der Siebdrucktechnololgie verlorengeht.

Als Substrat sind gängige kostengünstige Materialien wie -Al₂O₃ möglich.

Im Fall eines CO₂-Sensors bestehen die Schichten 3 und 5 aus Gold, 1 aus Nasicon und 6 aus Na₂CO₃, BaCO₃. Die elektrochemische Zelle hat den folgenden Aufbau:
CO₂,O₂' AU Na₂CO₃, BaCO₃ Na+-Leiter Au O₂''

Im Fall eines SOx-Sensors bestehen die Schichten 3 und 5 aus Pt, 1 aus β-Al₂O₃ und 6 aus (Na₂SO₄)_{0,9}(SrSO₄)_{0,1}. Die elektrochemische Zelle hat den folgenden Aufbau
SOx, O₂' Pt (Na₂SO₄)_{0,9} (SrSO₄)_{0,1} Na+-Leiter Pt

Als CO₂-sensitiver Festelektrolyt kann neben Na₂CO₃ z.B. auch Li₂CO₃ in reiner Form oder mit Zusätzen aliovalenter Ionen und/oder Kompositbildnern wie -Al₂O₃ verwendet werden. Als keramische stabile Festelektrolyte sind neben Verbindungen des Nascicon- und Lisicon-Typs andere komplexe chemisch stabile Oxoanionen einsetzbar, in denen das gleiche Ion beweglich ist wie in der anhydridsensitiven Salzschicht.

Im Falle eines NOx-Sensors, der mit gleichem Aufbau wie die obigen Ausführungsbeispiele realisiert wurde, bestehen die Schichten 3 und 5 aus Platin, 1 aus K₂YZR(PO₄)₃ und 6 aus [Ba(NO₃)₂]_{0,9} [KNO₃]_{0,02}. Die elektrochemische Zelle hat den folgenden Aufbau:
Nox, 0₂'Pt [Ba(NO₃)₂]_{0,9} [KNO₃]_{0,02} K₂YZR(PO₄)₃ Pt,NOx,O₂''

Sehr gute Ergebnisse wurden erfindungsgemäß mit zirkon- und bleihaltigen Gläsern erzielt. Daneben sind andere Gläser, auch anorganische Verbindungen, Keramiken geschlossener Porosität oder temperaturstabile Kunststoffe möglich, z.B. -Al₂O₃, SiC, Si₃N₄, und unterhalb von 250°C temperaturstabile Kunststoffe wie Epoxyharze möglich.

Im Ausführungsbeispiel ist die Glasschicht 4 so angebracht, daß sie den Teil der Metalischicht 3 bedeckt, der unmittelbar über dem Festelektrolyten 2 liegt. Dies sollte auch bei anderen Sensorgeometrien eingehalten werden. In der Figur sorgt ein dünner seitlicher Steg der Schicht 4, der auf den Festelektrolyten 2 stößt, dafür, daß der Elektronenleiter 3 auch auf seinem der Meßelektrode 5, 6 zugewandten seitlichen Bereich gasdicht abgeschlossen ist. Hingegen kann der Teil der Schicht 3, der unmittelbar an das Substrat 1 angrenzt und im elektrochemischen Sinn nicht zur Referenzelektrode zu zählen ist, z.B. für Anschlüsse freibleiben, wie in Fig. 1 der Fall ist. Bei anderen Geometrien kann es erforderlich sein, die gesamte Metallschicht an allen Rändern vollständig zu bedecken. Dies ist z.B. der Fall, wenn man von der einseitigen Substratbestückung abgeht und die Referenzelektrode beispielsweise allein auf der Unterseite des Sensors liegt. In diesen Fall grenzt die elektronenleitende Schicht der Referenzelektrode in ihrem gesamten Bereich an das Festelektrolytmaterial an und muß daher vollständig bedeckt werden.

## Patentansprüche

1. Galvanischer Festelektrolytsensor zur Messung gasförmiger Anhydride, aufweisend einen keramischen Festelektrolyten (2), der eine ein Elektronen leitendes Material (5) und eine reines oder dotiertes Alkali- oder Erdalkalisalz (6) umfassende Meßelektrode und eine hiervon räumlich getrennte und eine Abdeckschicht (4) aufweisende Referenzelektrode (3) aus einem Elektronen leitenden Material trägt,
**dadurch gekennzeichnet**,
daß das Elektronen leitende Material (3, 5) aus Gold oder Platin besteht,
daß die Abdeckschicht (4) aus einer einen gasdichten Abschluß der Referenzelektrode (3) bildenden Materialschicht aus einem hochschmelzenden Glas, insbesondere aus zirkon- und bleihaltigem Glas , einer Keramik geschlossener Porosität oder einem temperaturstabilen Kunststoff besteht, die nur das Elektronen leitende Material der Referenzelektrode (3) bedeckt, wobei lediglich ein Randbereich dieser Schicht (4) auf den Festelektrolyten (2) stößt.

2. Festelektrolytsensor nach Anspruch 1, dadurch gekennzeichnet, daß die gasförmigen Anhydride CO₂, SOx und NOx umfassen.

3. Festelektrolytsensor nach einem der vorhergehenden Ansprüche, dadurch gekennzeichnet, daß die Materialschicht (4) die gleichen Ionen wie der Festelektrolyt (2) enthält.

4. Festelektrolytsensor nach einem der vorhergehenden Ansprüche, dadurch gekennzeichnet, daß der Festelektrolyt (2,) die Meßelektrode (5, 6) und die Referenzelektrode (3) mit der darüberliegenden Materialschicht (4) auf ein Substrat (1) aufgedruckt sind.

## Claims

1. Galvanic solid electrolyte sensor for the measurement of gaseous anhydrides, having a ceramic solid electrolyte (2) which carries a measuring electrode comprising an electron- conducting material (5) and a pure or doped alkali salt or alkaline earth salt (6) and a reference electrode (3) made of an electron-conducting material, spatially separated from the measuring electrode and having a masking layer (4), characterized in that
the electron-conducting material (3, 5) is made of gold or platinum,
the masking layer (4) is made of a layer of material forming a gas-tight seal of the reference electrode (3), the layer of material comprising a high-melting glass, in particular glass with a zircon and lead content, a ceramic with closed porosity or a temperature-stable plastic material, which only covers the electron-conducting material of the reference electrode (3) with just an edge region of this layer (4) touching the solid electrolyte (2).

2. Solid electrolyte sensor according to Claim 1, characterized in that the gaseous anhydrides comprise CO₂, SOₓ and NOₓ.

3. Solid electrolyte sensor according to any one of the preceding claims, characterized in that the material layer (4) contains the same ions as the solid electrolyte (2).

4. Solid electrolyte sensor according to any one of the preceding claims, characterized in that the solid electrolyte (2), the measuring electrode (5, 6) and the reference electrode (3) with the superimposed material layer (4) are imprinted on a substrate (1).

## Revendications

1. Détecteur à électrolyte solide galvanique pour mesurer des anhydrides gazeux, comportant un électrolyte solide céramique (2) qui porte une électrode de mesure comportant un matériau conducteur des électrons (5) et un sel alcalin ou alcalino-terreux (6) pur ou dopé et une électrode de référence (3) en un matériau conducteur des électrons séparée spatialement de la précédente et comportant une couche de couverture (4), caractérisé en ce que le matériau conducteur des électrons (3, 5) consiste en or ou platine, en ce que la couche de couverture (4) consiste en une couche de matériau formant une fermeture étanche aux gaz de l'électrode de référence (3) en un verre à haut point de fusion, en particulier en un verre contenant du zirconium et du plomb, en une céramique à porosité fermée ou en une matière synthétique stable en température, qui ne recouvre que le matériau conducteur des électrons de l'électrode de référence (3), seul un domaine de bordure de cette couche (4) étant en contact avec l'électrolyte solide (2).

2. Détecteur à électrolyte solide selon la revendication 1, caractérisé en ce que les anhydrides gazeux comprennent CO₂, SOx et NOx.

3. Détecteur à électrolyte solide selon l'une des revendications précédentes, caractérisé en ce que la couche de matériau (4) contient les mêmes ions que l'électrolyte solide (2).

4. Détecteur à électrolyte solide selon l'une des revendications précédentes, caractérisé en ce que l'électrolyte solide (2), l'électrode de mesure (5, 6) et l'électrode de référence (3) avec la couche de matériau (4) située au-dessus sont formés par impression sur un substrat (1).
